# EUROPEAN PATENT APPLICATION

(11) **EP 1 006 420 A1**
(43) Date of publication of application: **07.06.2000**
(21) Application number: 99123706.6
(22) Date of filing: 29.11.1999
(51) Int. Cl.: G05B 19/042, C03B 9/41

(54) **Glassware molding machine with a machine operating data access level identification system**

(30) Priority: 02.12.1998 IT TO981016
(71) Applicant: BOTTERO S.p.A., 12010 Cuneo (IT)
(72) Inventor: Carenini, Giovanni, 12089 Villanova di Mondovi (IT)
(74) Representative: Eccetto, Mauro

(57) **Abstract**

The machine (1) has a supervising computer (10) in which are memorized a number of operating data of the machine (1) organized at different access levels; and a system (20) for identifying the access level to the operating data of the machine (1) and having a number of transponder devices (21), each assigned to a respective machine (1) operator, each memorizing a respective identification code, and each, when enabled, transmitting an identification signal containing the respective identification code; a reading device (22) connected to the supervising computer (10), and which generates an enabling signal to enable the transponder devices (21), receives the identification signals transmitted by the enabled transponder devices (21), and extracts the identification codes contained in the identification signals to supply the identification codes to the supervising computer (10); and an electronic table (27) memorized in the supervising computer (10) and containing the correspondence between each identification code and a respective access level to the operating data of the machine (1).

## Description

The present invention relates to a glassware molding machine with a machine operating data access level identification system.

Glass articles are known to be molded on so-called I.S. molding machines, which comprise a feed assembly for supplying a succession of glass gobs; and a number of molding sections, each having a respective mold assembly and which provides for receiving respective glass gobs from the feed assembly and successively molding respective glass articles.

More specifically, the feed assembly comprises an extruder for forming a bead of molten glass; a scissor-type cutting assembly for cutting the bead transversely and successively into glass gobs; a gob distributor for receiving the gobs from the cutting assembly; and, for each mold assembly, a respective gob delivery assembly for receiving the glass gobs from the distributor and conveying the gobs to the respective mold.

Once formed in the respective molds, the articles are extracted from the molds by respective actuator assemblies, which transfer each article from the respective mold to a common conveyor for feeding the articles to an annealing furnace.

The extruder, cutting assembly, gob distributor and actuator assemblies are controlled and synchronized by an electronic control unit or so-called line supervisor comprising an electronic control computer and, for each molding section, a respective pushbutton panel located close to the respective mold assembly and used by the machine operator to disable and/or make changes to the production cycles performed by the machine.

More specifically, the computer comprises a display for displaying machine operating data; and a keyboard by which the machine operator may access and make changes to the operating data.

To permit display and changes to different machine operating data according to the job categories of individual operators (foreman, machine operator, maintenance worker, etc.), the operating data are organized at different access levels, and I.S. machines are equipped with operator access level identification systems.

More specifically, the operating data of known I.S. machines are typically organized at at least three access levels : operator level, to which are assigned machine-safe operating data not relating to the configuration of the machine, such as production data; programming level, to which are assigned, for example, machine set-up data; and configuration level, to which are assigned potentially machine-damaging data, such as data relating to machine accessories.

In known access level identification systems, interaction between the machine and the operator authorized to access operating data at a given level is conducted by means of an access key assigned to the operator by the person in charge.

Two different types of access keys are currently known : a first is defined by an actual key, which is used in conjunction with a rotary click-operated level selector forming part of the line supervisor; and a second is defined by a disk, which is inserted into the control computer of the line supervisor, and on which the access level is memorized.

Known access level identification systems have several drawbacks, mainly due to the operating environment of the systems.

In particular, neither an actual key nor a computer disk provides for safely ensuring against improper use, on account of both being easily duplicated, and the issuing employee having no means of effectively controlling circulation among the operators of the various keys or disks normally issued for each access level.

Moreover, in environments such as that in which I.S. machines operate, computer disks are easily damaged both by magnetic fields and relatively high temperatures, and by having a relatively fragile support which is particularly sensitive to dirt.

Actual keys, on the other hand, do not permit many access levels to the operating data of I.S. machines, on account of the normally small number of distinct operating positions of the level selectors used in conjunction with the keys.

Finally, in the case of a firm operating a number of I.S. machines, a key and level selector combination calls for the same operating data access level organization on all the machines, to enable the operator to make changes to the authorized-access data on all the machines using the same key.

It is an object of the present invention to provide a glassware molding machine having a machine operating data access level identification system designed to eliminate the aforementioned drawbacks.

According to the present invention, there is provided a glassware molding machine comprising control means in which are memorized a number of operating data of the machine organized at different access levels; and identification means for identifying the access level to the operating data of the machine; characterized in that said identification means comprise a number of transponder means, each assigned to a respective machine operator, each memorizing a respective identification code, and each, when enabled, transmitting an identification signal containing the respective identification code; reading means connected to said control means, and which generate an enabling signal to enable said transponder means, receive the identification signals transmitted by the enabled transponder means, extract the identification codes contained in the identification signals, and supply the identification codes to the control means; and an electronic table memorized in said control means and containing the correspondence between each identification code and a respective access level to the operating data of the machine.

A preferred, non-limiting embodiment of the present invention will be described by way of example with reference to the accompanying drawings, in which:
Figure 1 shows a schematic view in perspective of a glassware molding machine having an access level identification system in accordance with the present invention;
Figure 2 shows a flow chart of the operations performed to identify the access level to the operating data of the Figure 1 machine.

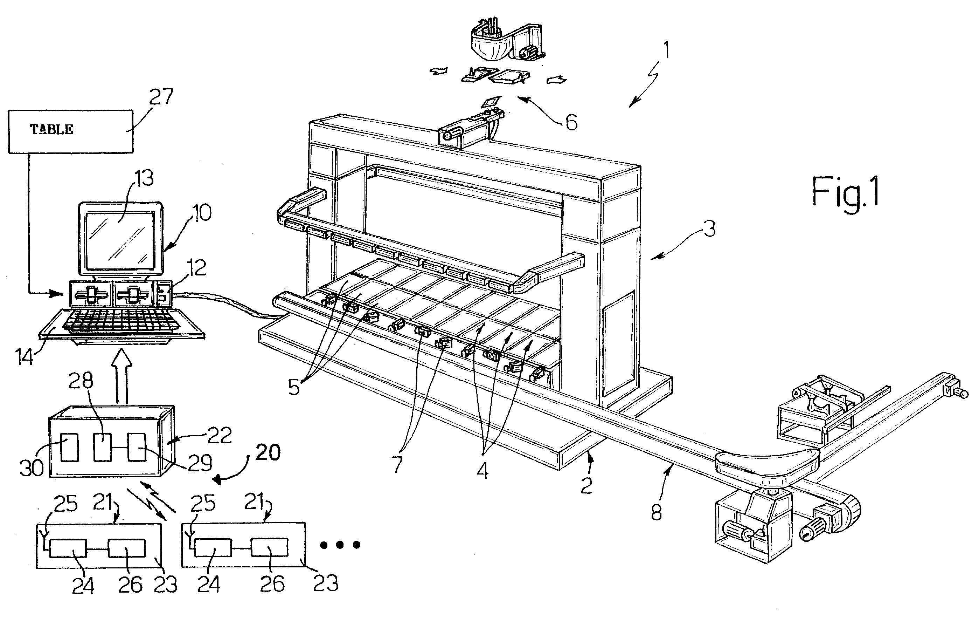

Number 1 in Figure 1 indicates as a whole a glassware molding machine comprising a base 2, a gantry-type frame 3 extending from base 2, and a number of molding sections 4 (shown schematically) for molding respective glass articles (not shown).

More specifically, each molding section 4 comprises a respective mold assembly 5 (known and therefore not described in detail) for successively molding a number of glass articles from respective glass gobs (not shown) supplied by a feed assembly 6; and a respective manipulating device 7 for removing the glass articles from the respective mold assembly 5 and feeding them onto a conveyor 8 for conveying the articles to an annealing furnace (not shown).

Machine 1 is controlled by a supervising computer 10 comprising a central unit 12 storing the operating data of machine 1 and actually controlling machine 1; a display unit 13 for displaying the operating data of machine 1; and a keyboard 14 by which the machine 1 operator accesses the operating data.

Machine 1 also comprises, for each molding section 4, an airtight pushbutton panel which is connected to supervising computer 10, is supported, in the example described, by frame 3 over and adjacent to base 2, and is used by the operators of machine 1 to manually control machine 1 by disabling and/or making changes to the production cycles performed by the machine under the control of supervising computer 10.

Machine 1 also comprises a number of portable computer connecting sockets (not shown) located at various parts of machine 1, and each for connecting to machine 1 a portable computer permitting operator access to the operating data of machine 1.

Machine 1 also comprises a noncontact read system 20 for identifying the machine operating data access level.

Identification system 20, shown schematically in the drawing, comprises a number of transponder devices 21, each assigned to a respective operator, each memorizing a respective unique, unalterable, 64-bit binary coded identification code, and each, when enabled, transmitting the respective identification code; and a reading device 22 connected to central unit 12 of supervising computer 10, and which enables transponder devices 21, receives the identification codes transmitted by transponder devices 21, and supplies the identification codes to central unit 12.

More specifically, each transponder device 21 is a commonly marketed passive type; i.e. having no independent supply of its own, is housed in a plastic support 23 of any form - e.g. a card, like a credit card, as shown in Figure 1, or a pendant, key-ring, glass cylinder, etc. - and comprises a transceiver circuit 24 with a respective aerial 25, and an identification code memorizing circuit 26 connected to transceiver circuit 24.

Reading device 22, which is a commonly marketed type, is defined by an electronic board comprising a radiofrequency signal generating circuit 28 for generating the signal enabling transponder devices 21; a transmitting circuit 29 connected to radiofrequency signal generating circuit 28 and for transmitting the enabling signal; and a receiving circuit 30 which receives the identification signals transmitted by the enabled transponder devices 21, decodes the identification signals to extract the identification codes contained in the identification signals, and supplies the identification codes to central unit 12 of supervising computer 10.

Identification system 20 also comprises an electronic table 27 (shown schematically) stored in central unit 12 of supervising computer 10 and containing the correspondence between each identification code, a respective access level to the operating data of machine 1, and the personal data and job category of the operator to whom the identification code is assigned.

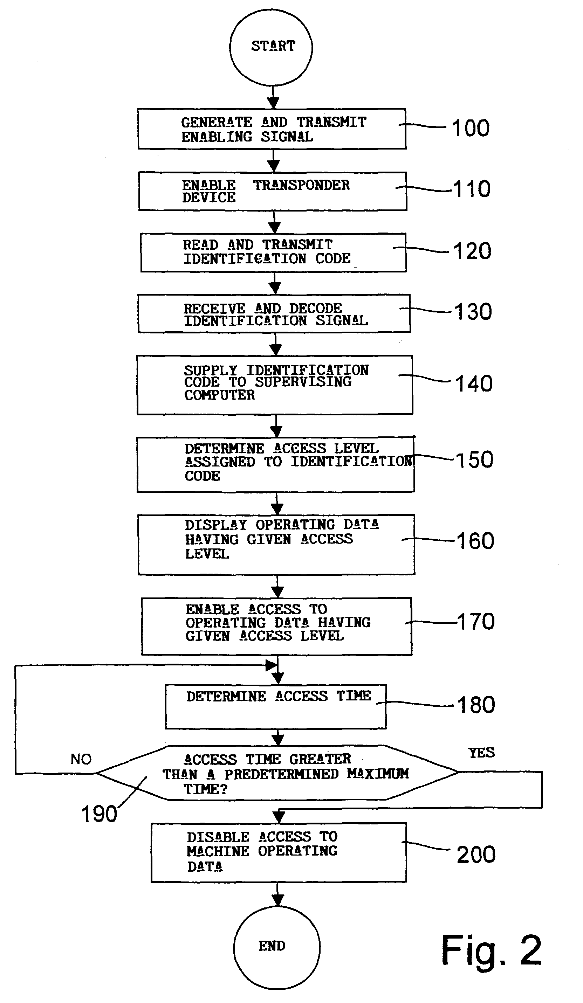

Operation of identification system 20 will now be described with reference to the Figure 2 flow chart.

In actual use, reading device 22 continually generates and transmits a radiofrequency enabling signal of such energy as to enable a transponder device 21 placed at a distance of no more than five centimeters from reading device 22 (block 100).

To make changes to the operating data of machine 1, an authorized operator therefore places transponder device 21 at a distance of no more than five centimeters from reading device 22, so that the enabling signal transmitted by reading device 22 can be received by transceiver circuit 24 of transponder device 21 and supply transponder device 21 with sufficient energy to enable it (block 110).

Transceiver circuit 24 then reads the identification code stored in memorizing circuit 26, and generates and transmits, e.g. by amplitude modulation, an identification signal containing the identification code read (block 120).

The identification signal is received and decoded by reading device 22 to extract the identification code (block 130).

Reading device 22 supplies the decoded identification code to central unit 12 of supervising computer 10 (block 140); and central unit 12 determines, on the basis of electronic table 27, the access level assigned to the decoded identification code (block 150), commands display on display unit 13 of the machine 1 operating data relative to the access level (block 160), and enables access to the operating data (block 170), which may then be modified by the operator by means of keyboard 14.

Central unit 12 also determines an elapsed access time from when access to the machine 1 operating data is enabled (block 180), and whether the access time is greater than a predetermined maximum time (block 190). If the access time is less than the predetermined maximum time (NO output of block 190), block 190 goes back to block 180. Conversely, if the access time is greater than the predetermined maximum time (YES output of block 190), central unit 12 disables access to the operating data (block 200).

As stated, the operating data of machine 1 may also be accessed by a portable computer connected to one of the connecting sockets. In which case, the portable computer is also provided with a reading device 22 to permit access to the operating data by authorized personnel only.

The advantages of glassware molding machine 1 according to the present invention are as follows.

Using access keys in the form of transponder devices issued to respective operators provides for safely ensuring against improper use, both by making duplication practically impossible, and, since the name of the operator corresponding to each identification code is known, by enabling strict control of access to the operating data of machine 1.

Moreover, the plastic supports of transponder devices 21 greatly reduce the possibility of damage to the internal circuitry of the devices, as well as protecting the internal circuitry against magnetic fields, high temperature and dirt.

The identification system according to the present invention also places no restrictions on the number or organization of the operating data access levels employed.

Clearly, changes may be made to machine 1 as described and illustrated herein without, however, departing from the scope of the present invention.

## Claims

1. A glassware molding machine (1) comprising control means (10) in which are memorized a number of operating data of the machine (1) organized at different access levels; and identification means (20) for identifying the access level to the operating data of the machine (1); characterized in that said identification means (20) comprise a number of transponder means (21), each assigned to a respective machine (1) operator, each memorizing a respective identification code, and each, when enabled, transmitting an identification signal containing the respective identification code; reading means (22) connected to said control means (10), and which generate an enabling signal to enable said transponder means (21), receive the identification signals transmitted by the enabled transponder means (21), extract the identification codes contained in the identification signals, and supply the identification codes to the control means (10); and an electronic table (27) memorized in said control means (10) and containing the correspondence between each identification code and a respective access level to the operating data of the machine (1).

2. A machine as claimed in Claim 1, characterized in that said transponder means (21) each comprise transceiving means (24, 25) for receiving said enabling signal transmitted by said reading means (22); and memorizing means (26) connected to said transceiving means (24) and memorizing the respective identification code; said transceiving means (24), when enabled, acquiring the identification code memorized in said memorizing means (26), and generating and transmitting said identification signal containing said identification code.

3. A machine as claimed in Claim 1 or 2, characterized in that said reading means (22) comprise radiofrequency signal generating means (28) for generating said enabling signal for enabling said transponder means (21); transmitting means (29) connected to said radiofrequency signal generating means (28) and for transmitting said enabling signal; and receiving means (30) for receiving the identification signals transmitted by the enabled transponder means (21), and decoding said identification signals to extract the identification codes contained in the identification signals and supply the identification codes to said control means (10).

4. A machine as claimed in any one of the foregoing Claims, characterized in that said control means (10) comprise processing means (150) for determining, on the basis of said electronic table (27), the access level assigned to each identification code transmitted by the enabled transponder means (21); and enabling means (170) connected to said processing means and for enabling access to the operating data having said given access level.

5. A machine as claimed in Claim 4, characterized in that said control means (10) also comprise clock means (180) for determining an elapsed access time from when access to the operating data of the machine (1) is enabled; and disabling means (190, 200) connected to said clock means (180) and for disabling said enabling means (170) in the event said access time is greater than a predetermined maximum time.
